# EUROPEAN PATENT APPLICATION

(11) **EP 4 207 435 A1**
(43) Date of publication of application: **05.07.2023**
(21) Application number: 21217991.5
(22) Date of filing: 28.12.2021
(51) Int. Cl.: H01M 10/613, H01M 10/643, H01M 10/6556, H01M 10/6564, H01M 10/6567, H01M 50/213, A62C 3/16

(54) **A BATTERY DEVICE COMPRISING A TUBE INCLUDING A COOLING AND/OR FIRE EXTINGUISHING MEDIUM**

(71) Applicant: Polarium Energy Solutions AB, 164 21 Kista (SE)
(72) Inventor: KROHN, Ulf, 164 40 KISTA (SE); KULLBERG, Johan, 164 40 KISTA (SE)
(74) Representative: AWA Sweden AB

(57) **Abstract**

A battery device (100) is provided. The battery device comprises a battery cell pack (105) including a plurality of battery cells, and a tube (101) disposed on the battery cell pack along a winding path such that each battery cell (118) of the plurality of battery cells is arranged adjacent to a portion of the tube. The tube includes a cooling and/or fire extinguishing medium (150). The battery device comprises a housing (102), in which the battery cell pack and the tube are arranged. For each battery cell, a respective portion (101a) of the tube arranged adjacent to the battery cell comprises a material configured to rupture upon exposure to heat and/or a flame produced by thermal runaway of the battery cell.

## Description

### TECHNICAL FIELD

The present disclosure relates generally to the field of battery devices. More specifically, the present disclosure relates to a battery device comprising a tube including a cooling and/or fire extinguishing medium, for protecting equipment of the battery device.

### BACKGROUND

In recent years, the demand for battery devices has increased rapidly all over the world. Efficient batteries are needed in vehicles, in mobile devices and as backup solutions to support necessary functions in case of power failure or cut.

If a battery cell of a battery cell pack, located within the battery device, experiences a critical malfunction, it may go into thermal runaway. In this state, combustion heat and/or flames may develop inside the battery cell pack, which may in turn affect other elements of the battery device. Heat and/or flames resulting from the thermal runaway of a battery cell may lead to the entire battery cell pack or device catching fire or exploding. There is therefore a need in preventing such fire or explosion. Further, there is an interest in protecting equipment located adjacent to the battery device.

Accordingly, it may be of interest to provide a battery device which may protect elements of the battery device when a thermal runaway of a battery cell of the battery cell pack occurs and/or reducing the risk of fire propagation from the battery device to equipment adjacent to the battery device.

### SUMMARY

An object of the present disclosure is to provide a battery device including a solution which protects elements of the battery device and which may reduce the risk of fire propagation from the battery device to equipment adjacent to, or in proximity to, the battery device if a battery cell of the battery cell pack goes into thermal runaway.

To achieve at least one of these objects and other objects, a battery device in accordance with the independent claim is provided. Preferred embodiments are defined by the dependent claims.

According to a first aspect, a battery device is provided. The battery device comprises a battery cell pack including a plurality of battery cells, and a tube disposed on the battery cell pack along a winding path such that each battery cell of the plurality of battery cells is arranged adjacent to a portion of the tube. The tube includes a cooling and/or fire extinguishing medium. The battery device further comprises a housing, in which the battery cell pack and the tube are arranged. For each battery cell, a respective portion of the tube arranged adjacent to the battery cell comprises a material configured to rupture upon exposure to heat and/or a flame produced by thermal runaway of the battery cell.

The present disclosure is based on the concept of providing cooling and/or fire extinguishing medium to a battery cell experiencing a thermal runaway. For this purpose, a tube is disposed on the battery cell pack such that each battery cell of the plurality of battery cells is adjacent to a portion of the tube and, for each battery cell, a respective portion of the tube is configured to rupture upon exposure to heat and/or a flame produced by thermal runaway of the battery cell. With such an arrangement, the cooling and/or fire extinguishing medium is allowed to exit, or be discharged from, the tube at the battery cell experiencing a thermal runaway. In other words, the tube allows for dousing, or quenching, a battery cell of the battery cell pack with the cooling and/or fire extinguishing medium upon exposure to heat and/or a flame produced by thermal runaway of the battery cell. The present solution is beneficial in that a battery cell entering into thermal runaway acts itself as a trigger for the rupturing of a respective portion of the tube adjacent to the battery cell, and thereby triggering the dousing, or quenching, of the battery cell with the cooling and/or fire extinguishing medium. A self-extinguishing function is therefore provided in the battery device.

Heat and/or flames resulting from a thermal runaway of a battery cell may spread to battery cells neighbouring the battery cell. The spread between battery cells may be exponential if left uncontrolled and may reach an uncontrollable level within a few seconds. Thus, it is of interest to cool and/or extinguish the fire as soon as possible, preferably before any spread has occurred. The present disclosure provides a fast and targeted discharge of cooling and/or fire extinguishing medium at the battery cell experiencing a thermal runaway, by passively using the thermal runaway as the trigger for discharging the cooling and/or fire extinguishing medium.

The tube may be configured as a canal or a vessel. The tube may be configured to contain the cooling and/or fire extinguishing medium. The tube may be arranged along the battery cell pack such that each battery cell of the plurality of battery cells is adjacent to a respective portion of the tube. By the term "winding path" it is further meant, for example, a curving, serpentine, coiling, looping, spiralling and/or zigzagging path.

The tube may comprise a material configured to rupture upon exposure to heat and/or a flame produced by a thermal runaway of a battery cell, such that a respective portion which is adjacent to the battery cell ruptures upon exposure to heat and/or the flame.

Due to the tube being disposed on, i.e. above, the battery cell pack, the force of gravity may contribute to discharging the cooling and/or fire extinguishing medium from the tube through a ruptured respective portion of the tube towards the battery cell which is adjacent to the portion of the tube.

With the term "adjacent to", it is meant that the respective portion of the tube is the portion of the tube located nearest the battery cell in question. It will be appreciated that a physical contact between the battery cell and the respective portion of the tube may not be necessary.

The battery cell pack may also be referred to as cell pack or an assembly of battery cells. Further, by the term "housing", it is further meant, for example, casing, chassis, frame, enclosure or body. Further, in the context of the present disclosure, the housing may comprise a top, a bottom and a number of sides. The number of sides may be any number, for example, one, three, four or more, depending on the geometry of the housing. However, the housing may in most cases have six sides (top, bottom, front, rear and two lateral sides).

A thermal runaway of a battery cell may be understood as, for example, a malfunction of the battery cell, and/or an ignition of, or by, the battery cell. A thermal runaway may increase the temperature and/or pressure inside the housing of the battery device. The increase in pressure inside the housing may be caused by the propagation of heat and/or the presence of combustion smoke and gases produced by the thermal runaway.

The tube may be pressurised. Thus, the pressure inside the tube may contribute to discharging the cooling and/or fire extinguishing medium, which may increase the amount of cooling and/or fire extinguishing medium that is discharged, thereby providing an improved cooling and/or fire extinguishing. The tube being pressurised may further reduce the time required for discharging the cooling and/or fire extinguishing medium, thereby increasing the efficiency of the cooling and/or fire extinguishing.

The tube may comprise a flexible and/or stretchable material, which may allow the tube to be filled such that the flexible and/or stretchable material stretches, and may thereby provide a pressure upon the cooling and/or fire extinguishing medium.

The battery device may further comprise a gas container fluidly connected to the tube and configured to pressurize the tube. The container may be arranged within the housing. Thus, the pressure applied by the gas container may contribute to an improved discharging of the cooling and/or fire extinguishing medium in that it may further increase the amount of cooling and/or fire extinguishing medium that is discharged. The pressure provided to the tube by the gas container may allow a majority, or substantially all, of the cooling and/or fire extinguishing medium to be discharged. For example, the gas inside the gas container may be an inert gas, such as Argon, or other suitable non-combustible gas such as Carbon dioxide.

The cooling and/or fire extinguishing medium may comprise liquid. The inherent properties of the liquid, such as viscosity of the liquid, may allow for an improved discharge of the cooling and/or fire extinguishing medium.

The cooling and/or fire extinguishing medium may comprise water, which may provide an increased level of cooling and/or fire extinguishing.

The tube may include between 1 dL and 4 dL of cooling and/or fire extinguishing medium. The tube may include between 1 cubic decimetre and 4 cubic decimetres of cooling and/or fire extinguishing medium. Due to the tube being arranged such that each battery cell of the plurality of battery cells is adjacent to a respective portion of the tube, the amount of cooling and/or fire extinguishing medium required to efficiently cool a battery cell experiencing thermal runaway may be reduced. Thus, between IdL and 4 dL, or between 1 cubic decimetre and 4 cubic decimetres, of cooling and/or fire extinguishing medium may be sufficient to effectively cool a battery cell experiencing thermal runaway. Further, the tube may include between 1 dL and 2 dL, or 1 cubic decimetre and 2 cubic decimetres, of cooling and/or fire extinguishing medium.

The tube may comprise a plastic or a non-electrically conductive material. Thus, the tube may be electrically protected, i.e. electrically insulated, from the battery cell pack, which may reduce a risk of the tube being damaged, thereby reducing a risk of the tube mistakenly rupturing.

The tube may comprise an aluminium material, thereby providing a more sturdy or robust tube. By way of example only, the thickness of the wall tube may be in the range of 0.4 to 1 millimetre.

The tube may be sandwiched between the battery cell pack and a heat- and fire-resistant material, such as for example a ceramic material like mica or woven fibre glass. In other words, the tube may be arranged between the battery cell pack and the heat- and fire-resistant material. The heat- and fire-resistant material may be configured to further protect elements of the battery device and/or to reduce the risk of heat and/or a flame produced by thermal runaway of the battery cell to propagate to battery cells neighbouring the battery cell experiencing the thermal runaway. The heat- and fire-resistant material may further be configured to keep the tube in place within the housing.

Alternatively, the tube may be disposed on a heat- and fire-resistant material which is disposed on the battery cell pack. The heat- and fire-resistant material may comprise a plurality of openings arranged over respective battery cells of the plurality of battery cells. The plurality of openings may be configured for allowing the cooling and/or fire extinguishing medium to pass through the heat- and fire-resistant material, thereby allowing the cooling and/or fire extinguishing medium to reach a battery cell experiencing a thermal runaway in order to cool the battery cell.

The heat- and fire-resistant material may comprise a flame-retardant and/or high-temperature resistant fabric which comprise a flame-retardant chemical and/or compound. The heat- and fire-resistant material may comprise a flame-retardant, such as a chemical and/or compound, which may increase the flame retardancy of the heat- and fire-resistant material. The heat- and fire-resistant material may be configured to prevent or slow down the further development of ignition.

Further, by the terms "heat- and fire-resistant" and "flame-retardant" it is further meant, for example, high-temperature resistant. The heat- and fire-resistant material may be able to withstand a temperature of at least 1500°C for at least 300 seconds.

The tube may be disposed on an electrically conductive layer. The electrically conductive layer may be arranged in contact with the battery cell pack to electrically connect the plurality of battery cells.

The electrically conductive layer may comprise a plurality of openings arranged over respective battery cells of the plurality of battery cells. The plurality of openings may be configured for allowing the cooling and/or fire extinguishing medium to pass through the electrically conductive layer, thereby allowing the cooling and/or fire extinguishing medium to reach a battery cell experiencing a thermal runaway in order to cool the battery cell. Thus, the electrically conductive layer may provide electrical connection between the plurality of battery cells while still allowing for the cooling and/or fire extinguishing medium to reach a battery cell experiencing a thermal runaway.

The tube may be configured to discharge the cooling and/or fire extinguishing medium through a ruptured portion towards a battery cell experiencing a thermal runaway. The discharged cooling and/or fire extinguishing medium may be configured to provide cooling for one or more battery cells which are neighbouring to the cell experiencing the thermal runaway. The discharged cooling and/or fire extinguishing medium may be discharged towards, or at, the battery cell experiencing the thermal runaway. At least some of the discharged cooling and/or fire extinguishing medium may end up around the battery cell, i.e. between the battery cell and the neighbouring battery cells, thereby providing cooling for one or more of the neighbouring battery cells. Thus, the risk of a spread of heat and flames between battery cells may be reduced.

The battery device may further comprise a cooling system configured to provide cooling to the battery cell pack. The tube may be separated from the cooling system and dedicated for cooling heat, and/or extinguishing a flame, originating at the battery cell upon thermal runaway. The cooling system may be understood as an active cooling system. For example, the cooling system may be configured to provide cooling to the battery device during normal operation of the battery device. The cooling device may comprise, but is not limited to, cooling, ventilation and/or air conditioning. The cooling device may comprise a liquid cooling system.

It is noted that other embodiments using all possible combinations of features recited in the above described embodiments may be envisaged. Thus, the present disclosure also relates to all possible combinations of features mentioned herein.

### BRIEF DESCRIPTION OF THE DRAWINGS

Exemplifying embodiments of the invention will be described below with reference to the accompanying drawings.
Figs. 1-3 are schematic views of a battery device according to one or more exemplifying embodiments.
Figs. 4 and 5 are schematic views of a cross section of a battery device according to one or more exemplifying embodiments.

All the figures are schematic, not necessarily to scale, and generally only show parts which are necessary in order to elucidate embodiments of the present invention, wherein other parts may be omitted or merely suggested. Like reference numerals refer to like elements throughout.

### DETAILED DESCRIPTION

The present invention will now be described hereinafter with reference to the accompanying drawings, in which exemplifying embodiments are shown. The present inventive concept may, however, be embodied in many different forms and should not be construed as limited to the embodiments set forth herein; rather, these embodiments are provided by way of example so that this disclosure will convey the scope of the invention to those skilled in the art. In the drawings, identical reference numerals denote the same or similar components having a same or similar function, unless specifically stated otherwise.

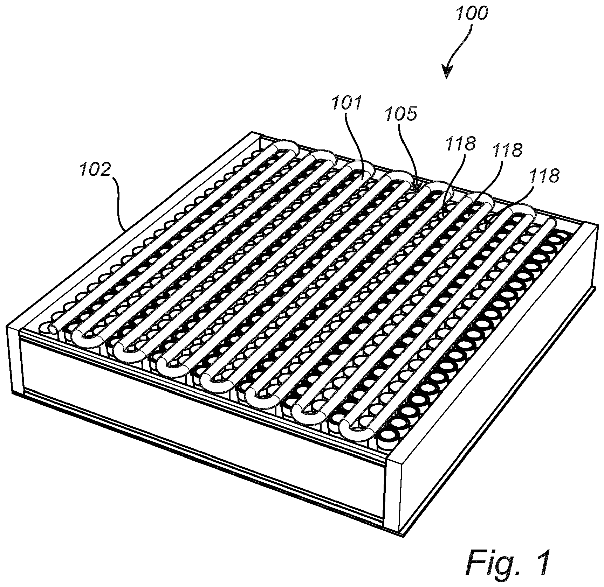

Fig. 1 is a schematic view of a battery device 100 according to one or more exemplifying embodiments.

The battery device 100 shown in Fig. 1 comprises a housing 102. The housing 102 depicted in Fig. 1 is a rectangular cuboid, however the housing 102 may have substantially any geometric three-dimensional (3D) shape. Further, the housing 102 is depicted without a top side. However, the lack of a top side of the housing 102 is purely to allow for illustration of the interior of the housing 102. Thus, it is to be understood that the housing 102 may comprise a top side, such that the housing 102 forms a substantially closed, or sealed, container.

The battery device 100 comprises a battery cell pack 105 including a plurality of battery cells 118. The battery cell pack 105 is not limited to comprising the depicted number of battery cells 118, and may comprise fewer or more battery cells 118. The battery cells 118 are arranged in a plurality of parallel rows. The battery device 100 further comprises a tube 101 including a cooling and/or fire extinguishing medium (not shown; see Fig. 6). The battery cell pack 105 and the tube 101 are arranged inside the housing 102.

The tube 101 is arranged along a winding path such that each battery cell 118 of the battery cells 118 is adjacent to a portion of the tube 101. For each battery cell, a respective portion of the tube is arranged adjacent to the battery cell comprises a material configured to rupture upon exposure to heat and/or a flame produced by thermal runaway of the battery cell. The respective portion of the tube 101 may be a portion, or section, of the tube 101 which is closest to a respective battery cell 118. Thus, the tube 101 is configured to discharge the cooling and/or fire extinguishing medium through the ruptured portion towards the battery cell 118 experiencing the thermal runaway in order to provide cooling and/or fire extinguishing of the battery cell 118. The cooling and/or fire extinguishing medium may provide additional cooling and/or fire extinguishing of battery cells 118 neighbouring the battery cell 118.

The tube 101 may comprise a plastic or a non-electrically conductive material. Alternatively, the tube 101 may comprise aluminium.

The winding path depicted in Fig. 1 includes a plurality of substantially straight sections and curve sections, wherein each curve section connects two substantially straight sections. The tube 118 is arranged along the substantially straight sections between two neighbouring rows of the plurality of parallel rows of battery cells 118.

Thus, each row of battery cells 118 is adjacent to a respective section of the tube 101. Consequently, each battery cell 118 of the battery cells 118 is adjacent to a respective portion of the tube 101. It is to be understood that the present disclosure is not limited with regards to the arrangement of the tube 101 along the depicted winding path. For example, the winding path may be curving, coiling, looping, spiralling and/or zigzagging, such that each battery cell 118 of the battery cells 118 is adjacent to a respective portion of the tube 101.

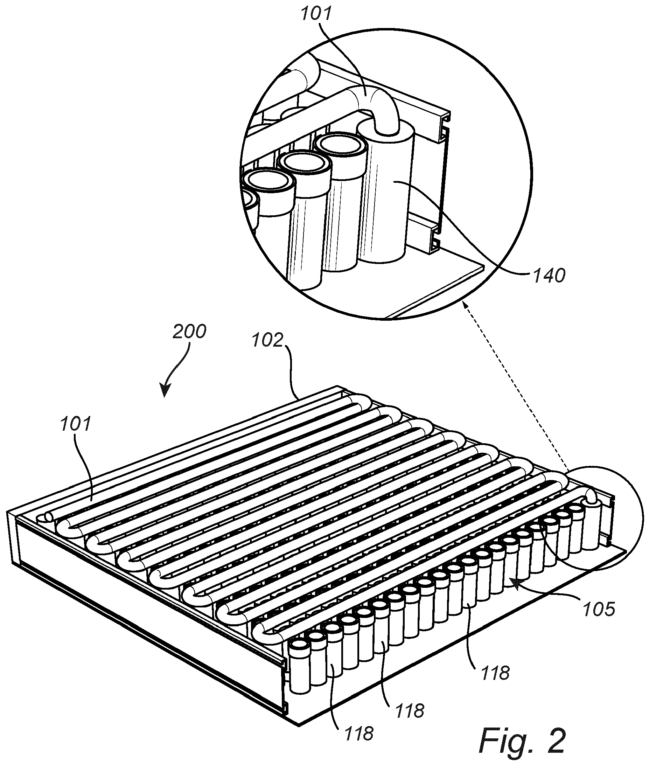

Fig. 2 is a schematic view of a battery device 200 according to one or more exemplifying embodiments. The battery device 200 described with reference to Fig. 2 may comprise features, elements and/or functions corresponding to the battery device described with reference to Fig. 1. Fig. 2 is provided for an increased understanding of a battery device 200 according to some embodiments. The same reference numerals in Figs. 1 and 2 denote the same or similar components, having the same or similar function.

A difference between the battery device 200 and the battery device described with reference to Fig. 1 is that the battery device 200 comprises a gas container 140. The gas container 140 is fluidly connected to the tube 101 and is configured to pressurize the tube 101. Thus, the pressure applied by the gas container 140 may contribute to improve the discharging of the cooling and/or fire extinguishing medium out of a ruptured portion of the tube 101 towards a battery cell 118 experiencing a thermal runaway. The gas container 140 is fluidly connected to the tube 101 at a longitudinal end of the tube 101. However, the gas container 140 may be fluidly connected to the tube 101 at any point along the tube 101, such as at, for example, a longitudinal middle of the tube 101.

The depicted gas container 140 may be arranged inside the housing 102, wherein the gas container 140 is arranged inside and at a corner of the housing 102. Thus, the gas container 140 is arranged between the battery cell pack 105 and the housing 102. However, the gas container 140 may, alternatively, be arranged substantially anywhere inside the housing 140. Alternatively, the gas container 140 may be arranged outside of the housing 102, and may be fluidly connected to the tube 101 through the housing 102.

The gas container 140 depicted in Fig. 2 has a cylindrical shape, however the gas container 140 may have substantially any geometric three-dimensional (3D) shape.

Another difference between the battery device 200 and the battery device described with reference to Fig. 1 is that the housing 102 of the battery device 200 comprises one less side. However, it is to be understood that the lack of the side of the housing 102 is simply to enable a view of the gas container 140 inside the housing 102, and therefore that the housing 102 may thereby comprise an additional side, similarly as depicted in Fig. 1.

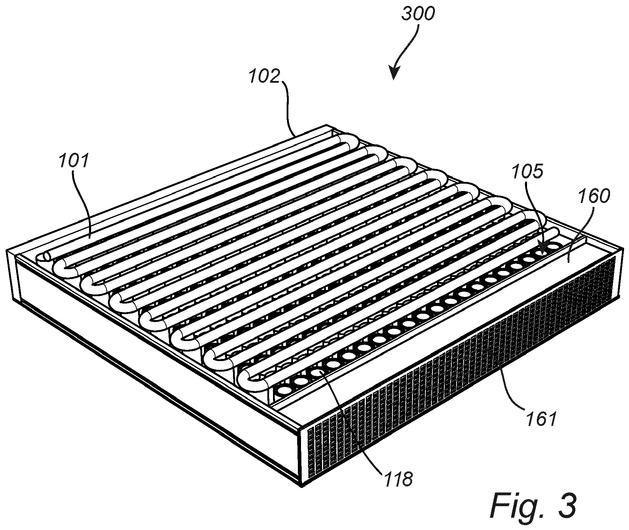

Fig. 3 is a schematic view of a battery device 300 according to one or more exemplifying embodiments. The battery device 300 described with reference to Fig. 3 may comprise features, elements and/or functions corresponding to the battery devices described with reference to Figs. 1 and 2. Fig. 3 is provided for an increased understanding of a battery device 300 according to some embodiments. The same reference numerals in Figs. 1 to 3 denote the same or similar components, having the same or similar function.

A difference between the battery device 300 and the battery devices described with reference to Figs. 1 and 2 is that the battery device 300 comprises a cooling system 160. The cooling system 160 is configured to provide cooling to the battery cell pack 105 and is separated from the tube 101. In other words, the tube 101 is not part of the cooling system 160 as such. The function of the cooling system 160 is to cool the battery device 300 upon normal operation of the battery cells. On the other hand, the provision of the tube 101 is for cooling the battery cells upon a malfunction (thermal runaway). Further, the tube 101 is able to discharge the cooling and/or fire extinguishing medium from above the battery cell pack 105, which may be more efficient than providing cooling and/or fire extinguishing from a side of the battery pack. Furthermore, the tube 101 is integrated into the battery device 300. Thus, the tube 101 may also be operable before, and after, installation of the battery device 300, such as during transport of the battery device 300.

The cooling system 160 may be arranged within the housing 102. The cooling system 160 may be arranged between the battery cell pack 105 and a side of the housing 102. Alternatively, the cooling system 160 may be arranged outside of the housing 102, and may be connected to the tube 101 through the housing 102.

The housing 102 may further comprise a vent 161 arranged through the side of the housing 102. The cooling system 160 may be fluidly connected to the vent 161 and configured to receive and/or exhaust air through the vent 161. The cooling system 160 may comprise one or more fans for transporting air from the battery cell pack 105, thereby cooling the battery cell pack 105. The transported air may be exhausted through the vent 161. Alternatively, or additionally, the cooling system 160 may comprise a liquid cooling system. The liquid cooling system may comprise cooling conduits for providing cooling fluid to the battery cell pack 105. The cooling system 160 may for example be configured for cooling by using a traditional refrigeration cycle. According to another alternative, the battery device 300 may comprise a cooling system 160 but no vent 161.

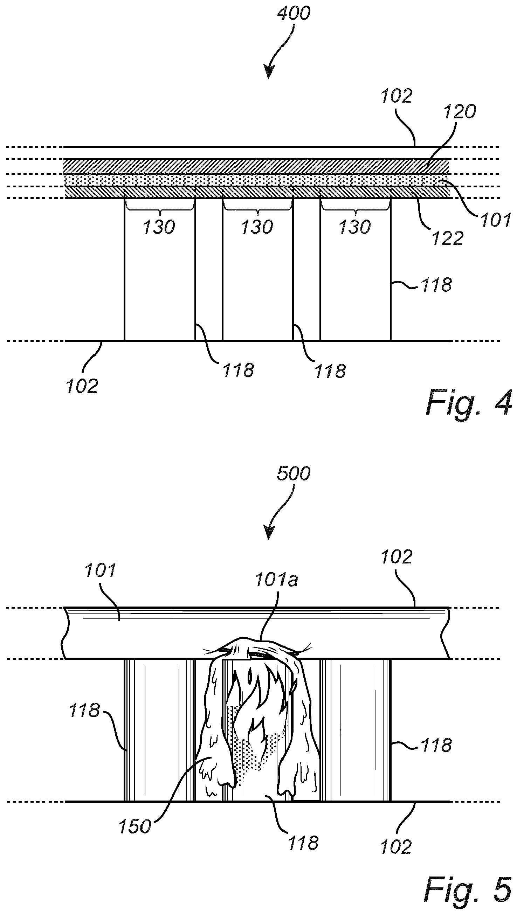

Fig. 4 is a schematic view of a cross section of a battery device 400 according to one or more exemplifying embodiments. The battery device 400 described with reference to Fig. 4 may comprise features, elements and/or functions corresponding to the battery devices described with reference to Figs. 1 to 3. Fig. 4 is provided for an increased understanding of a battery device 400 according to some embodiments. The same reference numerals in Figs. 1 to 4 denote the same or similar components, having the same or similar function.

Fig. 4 depicts at least a portion of a battery pack, comprising three battery cells 118, arranged inside at least a portion of the housing 102, wherein a top side and a bottom side of the housing 102 are shown. The three battery cells 118 are resting at the bottom side of the housing 102, however the battery cells 118 may be arranged at a distance from the bottom side.

The cross section depicted in Fig. 4 shows three battery cells 118. However, the number of battery cells 118 is purely exemplary and the number of battery cells 118 may be higher than what is depicted in Fig. 4.

The battery device 400 comprises an electrically conductive layer 122 arranged in contact with the battery cell pack, and thereby in contact with the battery cells 118. The electrically conductive layer 122 is configured to electrically connect the plurality of battery cells 118. The electrically conductive layer 122 further comprise a plurality of openings 130 arranged over respective battery cells 118.

The battery device 400 further comprises a tube 101 disposed on the electrically conductive layer 122 along a winding path such that each battery cell 118 is arranged adjacent to a portion of the tube. The tube 101 includes a cooling and/or fire extinguishing medium. For each battery cell, a respective portion of the tube 101 arranged adjacent to the battery cell 118 comprises a material configured to rupture upon exposure to heat and/or a flame produced by thermal runaway of the battery cell. The respective portion of the tube 101 may be understood as a portion of the tube 101 closest to the respective battery cell 118 and/or closest to the opening 130 arranged over a respective battery cell 118.

Each of the openings 130 is indicated in Fig. 4 by vertical dashed lines. The openings 130 may have a shape similar to a shape of a horizontal cross section of a battery cell 188. The openings 130 may be configured as holes in the conductive layer 122. Alternatively, the openings 130 may be configured as flaps, which may be configured to open upon exposure to heat and/or a flame produced by thermal runaway of the respective battery cell 118 because of increased pressure. Thus, the openings 130 may allow for cooling and/or fire extinguishing medium discharged by the tube 101 to reach a battery cell 118 experiencing a thermal runaway.

The battery device 400 may further comprise a heat- and fire-resistant material 120. The heat- and fire-resistant material 120 is disposed on the tube 101, such that the tube 101 is sandwiched between the electrically conducting layer 122 and the heat-and fire-resistant material 120. The heat- and fire-resistant material 120 may be configured to protect elements of the battery device 400 and/or to reduce the risk of heat and/or a flame produced by thermal runaway of a battery cell 118 to propagate to battery cells 118 neighbouring the battery cell 118 experiencing the thermal runaway.

The battery device 400 is not limited to comprising an electrically conductive layer 122 and a heat- and fire-resistant material 120 as depicted in Fig. 4. For example, the battery device 400 may not comprise an electrically conductive layer 122, such that the tube 101 is sandwiched between the battery cells 118, i.e. the battery cell pack, and the heat- and fire-resistant material 120. Further, the heat- and fire-resistant material 120 may be sandwiched between the tube 101 and the battery cells 118, i.e. the battery cell pack, in which the heat- and fire-resistant material 120 may further comprise openings arranged over respective battery cells 118, which may be configured for allowing the cooling and/or fire extinguishing medium to pass through the heat- and fire-resistant material 120. Furthermore, the battery device 400 may comprise the electrically conductive layer 122, and not the heat-and fire-resistant material 120. Alternatively, the electrically conductive layer 122 may not comprise openings 130.

Expressed differently, the electrically conductive layer 122 and the fire-resistant material 120 may be optional.

Fig. 5 is a schematic view of a cross section of a battery device 500 according to one or more exemplifying embodiments.

The battery device 500 described with reference to Fig. 5 may comprise features, elements and/or functions corresponding to the battery devices described with reference to Figs. 1 to 4. Fig. 5 is provided for an increased understanding of a battery device 500 according to some embodiments. The same reference numerals in Figs. 1 to 5 denote the same or similar components, having the same or similar function.

As compared to the battery device described with reference to Fig. 4, the battery device 500 depicted in Fig. 5 does not comprise an electrically conductive layer or a heat- and fire-resistant material. However, the battery device 500 is not limited to what is depicted in Fig. 5 and may further comprise, for example, an electrically conductive layer and/or a heat- and fire-resistant material.

A middle battery cell 118 of three battery cells 118 depicted in Fig. 5 is currently experiencing a thermal runaway, which is indicated by a flame symbol on the middle battery cell 118. The thermal runaway of the middle battery cell 118 may be caused by a malfunction of the middle battery cell 118 and/or of the battery device 500.

The battery device 500 comprises a tube 101 disposed on a battery cell pack comprising at least the three battery cells 118. The tube 101 comprises a material configured to rupture upon exposure to heat and/or a flame. More specifically, a respective portion 101a of the tube 101 is configured to rupture upon exposure to heat and/or a flame produced by thermal runaway of a battery cell 118 which is adjacent to the portion 101a of the tube 101. The term "adjacent" may in this context be understood as closest, or nearest. Thus, the portion 101a closest, or nearest, to the battery cell 118 experiencing a thermal runaway may be the first portion of the tube 118 to rupture, due to the exposure to heat and/or a flame produced by the thermal runaway being the most intense at that portion.

The tube 101 includes a cooling and/or fire extinguishing medium 150. Fig. 5 depicts that at least a portion of the cooling and/or fire extinguishing medium 150 has been discharged, towards the battery cell 118 experiencing the thermal runaway, by the tube 118 through a ruptured portion 101a of the tube 118, thereby providing cooling and/or fire extinguishing for the battery cell 118 experiencing the thermal runaway.

While the cooling and/or fire extinguishing medium 150 is discharged towards the battery cell 118 experiencing the thermal runaway, at least some of the cooling and/or fire extinguishing medium 150 may also be discharged between the battery cell 118 experiencing the thermal runaway and its neighbouring battery cells 118, thereby providing cooling for the neighbouring battery cells 118.

The cooling and/or fire extinguishing medium 150 depicted in Fig. 5 may comprise a liquid, which may be water. The tube 101 may include between 1dL and 4 dL of cooling and/or fire extinguishing medium 150.

While the present invention has been illustrated in the appended drawings and the foregoing description, such illustration is to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A battery device (100) comprising:
a battery cell pack (105) including a plurality of battery cells;
a tube (101) disposed on the battery cell pack along a winding path such that each battery cell (118) of the plurality of battery cells is arranged adjacent to a portion of the tube, wherein the tube includes a cooling and/or fire extinguishing medium (150); and
a housing (102), in which the battery cell pack and the tube are arranged;
wherein, for each battery cell, a respective portion (101a) of the tube arranged adjacent to the battery cell comprises a material configured to rupture upon exposure to heat and/or a flame produced by thermal runaway of the battery cell.

2. A battery device according to claim 1, wherein the tube is pressurised.

3. A battery device according to claim 2, further comprising a gas container (140) fluidly connected to the tube and configured to pressurize the tube.

4. A battery device according to any of claims 1 to 3, wherein the cooling and/or fire extinguishing medium comprises liquid.

5. A battery device according to claim 4, wherein the cooling and/or fire extinguishing medium comprises water.

6. A battery device according to any of the preceding claims, wherein the tube includes between 1 dL and 4 dL of cooling and/or fire extinguishing medium.

7. A battery device according to any of the preceding claims, wherein the tube comprises a plastic or a non-electrically conductive material.

8. A battery device according to any of claims 1 to 6, wherein the tube comprises aluminium.

9. A battery device according to any of the preceding claims, wherein the tube is sandwiched between the battery cell pack and a heat- and fire-resistant material (120).

10. A battery device according to any of the preceding claims, wherein
the tube is disposed on an electrically conductive layer (122) arranged in contact with the battery cell pack to electrically connect the plurality of battery cells.

11. A battery device according to claim 10, wherein the electrically conductive layer comprises a plurality of openings (130) arranged over respective battery cells of the plurality of battery cells.

12. A battery device according to any of the preceding claims, wherein the tube is configured to discharge the cooling and/or fire extinguishing medium through a ruptured portion (101a) towards said cell, and wherein
the discharged cooling and/or fire extinguishing medium is configured to provide cooling for one or more cells which are neighbouring to said cell.

13. A battery device according to any of the preceding claims, further comprising a cooling system (160) configured to provide cooling to the battery cell pack, and wherein
the tube is separated from the cooling system and dedicated for cooling heat, and/or extinguishing a flame, originating at the battery cell upon thermal runaway.
